# EUROPÄISCHE PATENTSCHRIFT

(11) **EP 1 357 325 B1**
(45) Veröffentlichungstag und Bekanntmachung des Hinweises auf die Patenterteilung: **29.06.2005**
(21) Anmeldenummer: 03007627.7
(22) Anmeldetag: 02.04.2003
(51) Int. Cl.: F16L 37/56

(54) **Schnellkupplung**
Quick-acting coupling
Raccord rapide

(30) Priorität: 22.04.2002 DE 10217922
(43) Veröffentlichungstag der Anmeldung: 29.10.2003
(73) Patentinhaber: TEMA Marketing AG, 6300 Zug (CH)
(72) Erfinder: Knuthson, Per, 520 50 Stenstorp (SE)
(74) Vertreter: Richter, Werdermann, Gerbaulet & Hofmann

(56) Entgegenhaltungen:
- DE-A- 2 061 821
- DE-A- 19 938 876
- US-A- 3 544 063

## Beschreibung

Die Erfindung betrifft eine Kupplung mit den im Oberbegriff des Anspruchs 1 genannten Merkmalen.

Schnellkupplungen der gattungsgemäßen Art sind bekannt. Sie dienen der Verbindung von druckbehafteten, mediumführenden Leitungen und kommen für Flüssigkeiten, beispielsweise Hydrauliköle, Gase und andere geeignete Medien zum Einsatz. Derartige Schnellkupplungen bestehen üblicherweise aus zwei Kupplungsteilen, wobei ein erstes Kupplungsteil ein Steckteil und ein zweites Kupplungsteil ein Hülsenteil ist. Zur Kupplung ist das Steckteil in das Hülsenteil einschiebbar. Die gattungsgemäße Schnellkupplung dient auch der Verbindung von unter hohen Mediendrücken stehenden Leitungen. Dabei muss die Verbindung einmal unter Druck im Hülsenteil, ein anderes Mal unter Druck im Steckteil der Kupplung hergestellt werden. Die Verbindung kann auch unter Druck in beiden Kupplungsteilen oder im drucklosen Zustand beider Kupplungsteile hergestellt werden.

Bei Schnellkupplungen für hohe Mediendrücke von beispielsweise 20 bis 50 MPa in einem der beiden oder beiden Kupplungsteilen sind zur leichteren Handhabung beim Kupplungsvorgang Druckentlastungsventile bekannt. Mit Hilfe solcher Druckentlastungsventile ist es möglich, den Druck im Kupplungsteil durch Ableiten einer geringen Menge des Mediums zur Stirnseite des Kupplungsteils zu reduzieren. Auf diese Weise wird das Verbinden der Kupplungsteile der Schnellkupplung erleichtert. Die Anordnung von Druckentlastungsventilen in beiden Kupplungsteilen ist ebenfalls bekannt.

Aus der DE 41 01 001 A1 ist eine Kupplungsvorrichtung bekannt, bei der ein Druckentlastungsventil im Innern mindestens eines Kupplungsteiles angeordnet und betätigt wird, wenn das Steckteil mit einem Hülsenteil verbunden wird. Das Druckentlastungsventil umfasst einen Ableitkanal für den Mediendruck und ein Absperrelement, das in dem Druckentlastungsventil angeordnet ist und über ein Betätigungselement betätigt werden kann. Bei Betätigung des Druckentlastungsventils bilden die damit verbundenen Kammern der Kupplungsteile kommunizierende Gefäße, wodurch ein Druckausgleich stattfindet und die Kupplung mit einem geringeren Kraftaufwand geschlossen werden kann.

Ein bei Schnellkupplungen häufig auftretendes Problem besteht darin, dass die in den Kupplungsteilen befindlichen Druckentlastungsventile einen komplizierten konstruktiven Aufbau aufweisen. Zudem führen Verschmutzungen im Medium dazu, dass sich die Druckentlastungsventile zusetzen und die Schnellkupplungen schwergängig werden. Nachteilig ist weiterhin, dass je nach Art der Schnellkupplung das Steckteil oder das Hülsenteil oder beide Kupplungsteile mit den komplizierten Druckentlastungsventile ausgestattet werden müssen.

Aus der gattungsbildenden US 35 44 063 A ist eine Kupplung zum Verbinden von wenigstens zwei unter Druck stehenden Leitungen bekannt, mit einem ersten Kupplungsteil, das druckdicht mit einem zweiten Kupplungsteil verbindbar ist, wobei eine der Kupplung zugeordnete externe Druckentlastungseinrichtung über wenigstens eine Druckentlastungseinrichtung mit wenigstens einer der unter Druck stehenden Leitungen verbindbar ist, und das erste Kupplungsteil ein Steckteil ist und in einem Verbindungsblock angeordnet ist.

Eine als Schnellkupplung ausgebildete Kupplung ist aus der DE 20 61 821 A bekannt.

Der Erfindung liegt die Aufgabe zugrunde, eine Schnellkupplung bereitzustellen, die in einfacher Weise ein einfaches Kuppeln unter Vermeidung der genannten Nachteile in allen Druckbereichen erlaubt.

Erfindungsgemäß wird diese Aufgabe durch eine Schnellkupplung mit den im Anspruch 1 genannten Merkmalen gelöst.

Dadurch, dass ein erstes Kupplungsteil, das druckdicht zum Verbinden von wenigstens zwei unter Druck stehenden Leitungen, mit einem zweiten Kupplungsteil verbindbar ist und der Schnellkupplung eine externe Druckentlastungseinrichtung zugeordnet ist, die über wenigstens eine Druckentlastungsverbindung mit wenigstens einer der unter Druck stehenden Leitungen verbunden ist, wird ein einfacher Kupplungsvorgang in allen Druckbereichen ermöglicht.

Dabei ist das die Schnellkupplung bildende erste Kupplungsteil ein Steckteil und das zweite Kupplungsteil ein Hülsenteil. Das Steckteil ist gemeinsam mit einem Zapfen in einem zum Steckteil gehörenden Verbindungsblock gelagert. Das Hülsenteil ist gemeinsam mit einer Steuereinrichtung in einem zum Hülsenteil gehörenden weiteren Verbindungsblock angeordnet. Hierdurch ergibt sich ein sehr kompakter und funktioneller Aufbau der Schnellkupplung.

Eine bevorzugte Ausgestaltung der Erfindung sieht vor, das die externe Steuereinrichtung in die externe Druckentlastungseinrichtung eingreift. Die Druckentlastungseinrichtung wird in einem dritten Verbindungsblock gelagert. Die Steuereinrichtung umfasst einen verlagerbaren Steuerkolben mit mindestens einer Nocke. Der Steuerkolben mit der Nocke greift in ein in der Druckentlastungseinrichtung angeordnetes Druckentlastungsventilsystem ein. Über die Nocke ist je nach Position des Steckteiles gegenüber dem Hülsenteil das Druckentlastungsventilsystem öffenbar oder schließbar. Hierdurch wird eine Druckentlastungseinrichtung erhalten, die sich durch eine hohe Funktionssicherheit auszeichnet.

Erfindungsgemäß bevorzugt ist ferner eine Druckentlastungsverbindung zwischen mindestens einer unter Druck stehenden Leitung und der Druckentlastungseinrichtung. Dabei ist jeder Leitung beziehungsweise jedem Kupplungspaar - Steckteil und Hülsenteil - der Schnellkupplung eine Druckentlastungsverbindung und ein Druckentlastungsventilsystem zugeordnet. Dem Druckentlastungsventilsystem ist eine Druckkammer und die Druckentlastungsleitung zugeordnet. Im Moment der Öffnung des zwischengeschalteten Druckentlastungsventilsystems wird die Druckentlastungsverbindung zur Druckkammer sowie zur Druckentlastungsleitung freigegeben.

Eine besonders bevorzugte Ausgestaltung der Erfindung sieht ferner vor, dass in der Schnellkupplung mehrere Kupplungspaare integriert sind. Für diesen Fall sind mehrere Leitungen über je eine Druckentlastungsverbindung mit je einem Druckentlastungsventilsystem verbunden. Die Druckentlastungsventilsysteme öffnen in Abhängigkeit von der Steuereinrichtung, wodurch das Medium in die Druckkammer strömt - und von dort in die gemeinsame Druckentlastungsleitung. Abhängig vom herrschenden Druck in der Druckentlastungsleitung und dem Kupplungspaar erfolgt eine Druckentlastung der Kupplungspaare der Schnellkupplung.

In bevorzugter Ausgestaltung der Erfindung ist durch die Steuereinrichtung beim Kupplungsvorgang entsprechend der auf dem Steuerkolben angeordneten Nokke eine Synchronisation der Öffnung des Druckentlastungsventilsystems möglich. Somit findet der Druckausgleich mehrerer Kupplungspaare synchron über die jeweiligen Druckentlastungsverbindungen und die gemeinsame Druckentlastungsleitung statt.

In weiterer bevorzugten Ausgestaltung der Erfindung ist zur Erreichung eines möglichst kurzen aber synchronisierten Öffnens des jeweiligen Druckentlastungsventilsystems der Steuerkolben so angeordnet, dass die Nocke genau zu dem Zeitpunkt in das Druckentlastungsventilsystem hineinbewegt beziehungsweise herausbewegt wird, wenn sich die jeweiligen Dichteinrichtungen in den Kupplungsteilen öffnen beziehungsweise schließen.

In vorteilhafter Ausgestaltung ist ein internes Druckentlastungsventil im Innern mindestens eines Kupplungsteiles durch Anordnung einer externen Druckentlastungseinrichtung verzichtbar.

Nachfolgend werden weitere bevorzugte Ausgestaltungen der Erfindung anhand eines Kupplungspaares beschrieben.

Sie gelten jedoch auch bei Ausführungen von mehreren Kupplungspaaren innerhalb der Schnellkupplung entsprechend.

Eine weitere bevorzugte Ausgestaltung der Erfindung ist, dass die unter Druck stehende Leitung in einem ersten Schritt miteinander gekoppelt wird, wodurch gleichzeitig eine axiale Verlagerung des Zapfens am Steckteil in Richtung des Hülsenteiles stattfindet. Der Zapfen verschiebt unter Bildung eines Anschlages den Steuerkolben. In der Schnellkupplung wird eine Dichteinrichtung im Hülsenteil und eine Dichteinrichtung im Steckteil freigegeben und das Medium strömt zunächst von einem Kanal im Hülsenteil in eine erste Kammer im Steckteil. Gleichzeitig betätigt die Nocke des Steuerkolbens über eine Ventilkugel ein Druckentlastungsventil und öffnet ein Druckentlastungsventilsystem und damit die Druckentlastungseinrichtung.

Ferner bevorzugt wird in einem auf den ersten Schritt folgenden zweiten Schritt eine weitere Dichteinrichtung des Steckteiles geöffnet, wodurch das Kupplungspaar der Schnellkupplung beginnt, sich vollständig zu öffnen. Das Druckentlastungsventilsystem ist durch den fortgesetzten Eingriff der Nocke an der Ventilkugel des weiter in das Druckentlastungsventilsystem verschobenen Steuerkolbens noch geöffnet, so dass eine Druckentlastung fortgesetzt wird.

In einem dritten Kupplungsschritt verlagert der Zapfen den Steuerkolben axial und verbindet unter gleichzeitiger Freigabe des Ventils die Kammer und den Kanal miteinander. Die Nocke des Steuerkolbens hält dabei das Druckentlastungsventilsystem geöffnet und gibt die Druckentlastungsverbindung zur Drukkentlastungskammer und zur anschließenden Druckentlastungsleitung zur Erzeugung eines Druckausgleichs innerhalb der Schnellkupplung frei.

Im letzten Schritt öffnet sich die Dichteinrichtung vollständig, wodurch durch weitere axiale Verlagerung der Kupplungsteile und des Zapfens die Nocke des Steuerkolbens unter Freigabe der Ventilkugel und dem Druckentlastungsventil aus dem Druckentlastungsventilsystem herausgeführt wird, das Druckentlastungsventilsystem schließt und sich der Druck in der Schnellkupplung aufbaut.

In bevorzugter Ausgestaltung der Erfindung ist weiterhin ein Steuerkolben mit mehreren Nocken ausführbar, so dass ein Öffnen und Schließen der Schnellkupplung unter mehrmaligem Öffnen und Schließen eines oder mehrerer Drukkentlastungsventilsysteme möglich ist. In diesem Fall ist eine Druckentlastung zu unterschiedlichen Zeitpunkten in den Kupplungsteilen der Schnellkupplung möglich.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: in einer Außenansicht eine Schnellkupplung im ungekuppelten Zustand;
- Figur 2: in einem Schnitt die Schnellkupplung im ungekuppelten Zustand;
- Figur 3: in einem Schnitt die Schnellkupplung im teilweise gekuppelten Zustand in einem ersten Kupplungsschritt;
- Figur 4: in einem Schnitt die Schnellkupplung im teilweise gekuppelten Zustand in einem zweiten Kupplungsschritt;
- Figur 5: in einem Schnitt die Schnellkupplung im gekuppelten Zustand und
- Figur 6: in einer Außenansicht eine Schnellkupplung im gekuppelten Zustand.

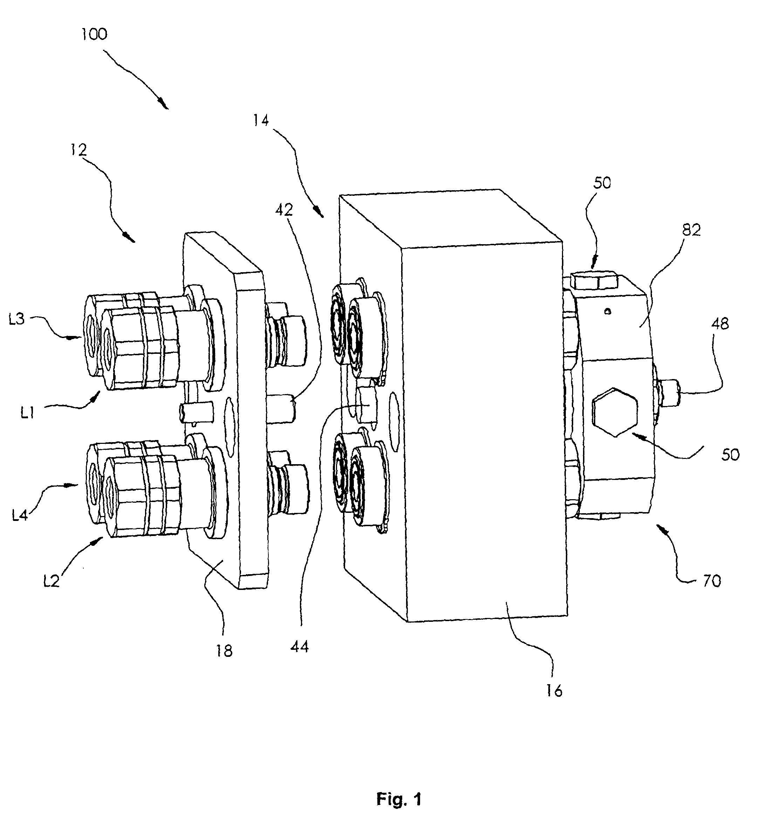

Die insgesamt mit 100 bezeichnete Schnellkupplung - in Figur 1 im ungekuppelten Zustand dargestellt - weist einen an sich bekannten Grundaufbau auf. Sie besteht aus zwei Kupplungsteilen 12 und 14. Dabei ist das Kupplungsteil 12 ein Steckteil und das Kupplungsteil 14 ein Hülsenteil. Die Besonderheit der Schnellkupplung 100 besteht darin, dass in einem Verbindungsblock 18 mehrere Steckteile 12 mehrerer miteinander zu verbindender, unter Druck stehender Leitungen L1, L2, L3, L4 angeordnet sind. Die den Steckteilen 12 gegenüber stehenden mehreren Hülsenteile 14 sind in einem Verbindungsblock 16 zusammengefasst. Die aus den Hülsenteilen 14 herausführenden Leitungen L1, L2, L3, L4 sind in Figur 1 nicht dargestellt.

Figur 1 zeigt ferner einen Zapfen 42, der zentrisch im Verbindungsblock 18 zwischen den Leitungen Lx angeordnet ist. Dem Zapfen 42 steht zwischen den Hülsenteilen 14 ein im Verbindungsblock 16 zentrisch angeordneter Steuerkolben 44 gegenüber.

Die Hülsenteile 14 sind zudem mit einer Druckentlastungseinrichtung 70 verbunden. Die Elemente der Druckentlastungseinrichtung 70 sind in einem weiteren Verbindungsblock 82 mit dem Verbindungsblock 16 verbunden.

In die Druckentlastungseinrichtung 70 sind Druckentlastungsventilsysteme 50 integriert. In Figur 1 sind von den Druckentlastungsventilsystemen 50 nur die äußeren Anschlüsse sichtbar. Jeder Leitung Lx ist ein eigenes Druckentlastungsventilsystem 50 zugeordnet. Die vorhandenen Druckentlastungsventilsysteme 50 sind über eine in Figur 1 nicht sichtbare Druckentlastungskammer 46 mit einer gemeinsamen Druckentlastungsleitung 48 verbunden.

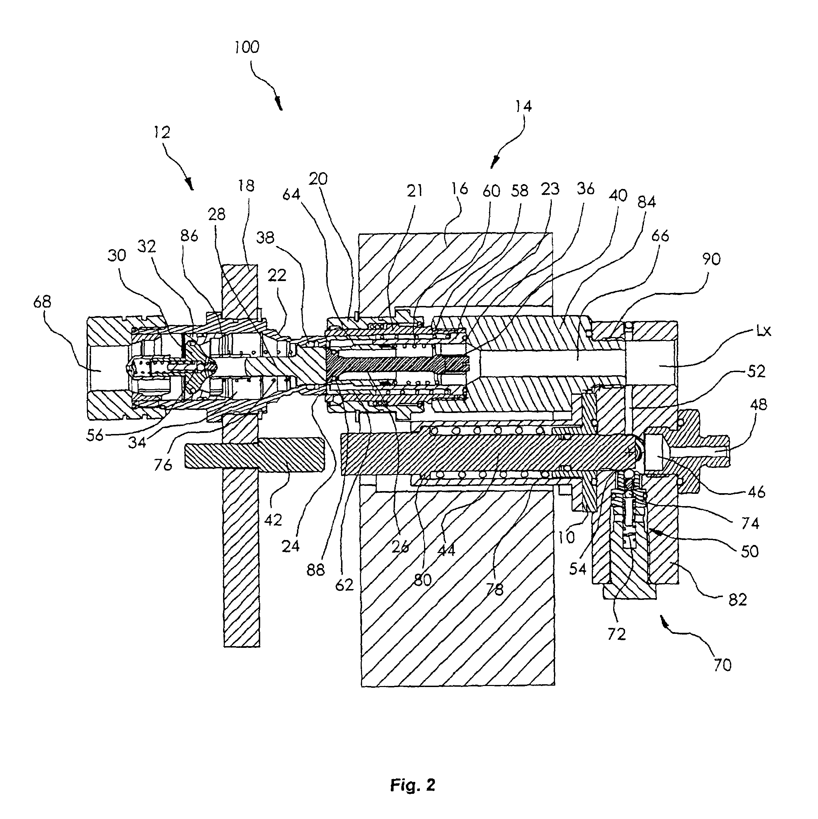

Figur 2 zeigt den Schnitt durch eine Schnellkupplung 100 im ungekuppelten Zustand. Dabei wird zur Vereinfachung nur ein Steckteil 12 und ein Hülsenteil 14 der Schnellkupplung 100 für eine Leitung Lx im Schnitt dargestellt. Das Steckteil 12 ist über den Verbindungsblock 18 mit dem Zapfen 42 verbunden.

Das Steckteil 12 liegt in seiner Ausgangsposition einerseits mit seiner Gehäusestirnfläche 24 seines Gehäuses 22 an einem axial verlagerbaren Gehäuseelement 62 des Hülsenteiles 14 an. Andererseits liegt ein Stößel 28, der über eine Dichteinrichtung 38 an dem Gehäuse 22 des Steckteils 12 abdichtet, mit seiner Stirnfläche an einem fest gelagerten Schiebeelement 26 an.

Das Schiebeelement 26 ist in einem Schiebeelementlager 40 gelagert. Der in einem Stößellager 86 axial geführte Stößel 28 wird von der Kraft eines Federelementes 76 gegen die Dichteinrichtung 38 gedrückt und verschließt eine Kammer 34 gegen die Atmosphäre. Die Kammer 34 wird in Richtung eines mediumführenden, unter Druck stehenden Kanals 68 durch ein Ventil 30 an einem Dichtsitz 32 verschlossen.

In dem Ventil 30 kann ein Druckentlastungsventil 56 angeordnet sein. Die erfindungsgemäße Funktion der Schnellkupplung 100, entsprechend den Erläuterungen der weiteren Figuren, ist jedoch auch ohne Druckentlastungsventil gegeben.

Das Hülsenteil 14 dichtet ein äußeres Gehäuse 20 gegen den Verbindungsblock 16 ab. Es ist gegenüber dem Verbindungsblock 16 nicht verlagerbar angeordnet. Dem äußeren Gehäuse 20 schließt sich an der Innenwandung ein Gehäuseelement 21 an, welches an einem Gehäuseblock 84 einen Anschlag bildet und mittels einer Dichteinrichtung 36 gegen den Gehäuseblock 84 des Hülsenteiles 14 abdichtet.

Die Dichteinrichtung 36 des Gehäuseelementes 21 dichtet zudem ein sich anschließendes weiter innen liegendes Gehäuseelement 62 gegen das äußere Gehäuse 20 ab.

Das Gehäuseelement 62 ist an der Innenwandung des Gehäuseelementes 21 angeordnet. Ein weiteres, axial verlagerbares Gehäuseelement 64 ist beabstandet zu einem Gehäuseelement 23 im Innern des Hülsenteiles 14 angeordnet. Das Gehäuseelement 62 ist zwischen den Gehäuseelementen 62 und 64 sowie 21 und 23 gegen die Kraft von Federelementen 58 und 60 axial verlagerbar. Zwischen den Gehäuseelementen 62 und 23 ist das Federelement 58 und zwischen den Gehäuseelementen 64 und 23 das Federelement 60 angeordnet. Das Schiebeelement 26 dichtet über eine Dichteinrichtung 88 in ungekuppeltem Zustand das Hülsenteil 14 gegenüber dem axial verlagerbaren Gehäuseelement 64 ab.

An das Schiebeelement 26 schließt sich ein Kanal 66 an, der zu der mediumführenden Leitung Lx des Kupplungsteiles 14 hin offen ist. Der Kanal 66 ist in den Gehäuseblock 84 integriert.

An dem Gehäuseblock 84 ist über eine Lagerhülse 78 parallel beabstandet zur Schnellkupplung 100 der Steuerkolben 44 in den Verbindungsblock 16 integriert.

Der Steuerkolben 44 liegt auf einer Achse mit dem Zapfen 42 und bildet in der Lagerhülse 78 in ungekuppeltem Zustand einen Anschlag 80 aus. Der Steuerkolben 44 ist an dem dem Zapfen abgewandten Ende über eine Dichteinrichtung mit einem Zwischenlager 90 und über eine weitere Dichteinrichtung mit der Druckentlastungseinrichtung 70 verbunden. Der Steuerkolben 44 greift in ungekuppeltem Zustand mit einer Steuereinrichtung 10 in das Druckentlastungsventilsystem 50 nicht ein.

Die Steuereinrichtung 10 umfasst den Steuerkolben 44 und mindestens eine auf dem Steuerkolben 44 angeordnete Nocke 54, die im ungekuppelten Zustand nicht in das Druckentlastungsventilsystem 50 eingreift.

Das Druckentlastungsventilsystem 50 umfasst eine Ventilfeder 72 und eine Ventilkugel 74. Die Ventilkugel 74 ist radial an dem Steuerkolben 44 angeordnet.

Von der Druckentlastungskammer 46 geht einerseits mindestens eine Drukkentlastungsverbindung 52 zu mindestens einer mediumführenden druckbehafteten Leitung Lx ab. Diese Druckentlastungsverbindung 52 ist im ungekuppelten Zustand durch das Druckentlastungsventilsystem 50 verschlossen. Andererseits ist der Druckentlastungskammer 46 eine Druckentlastungsleitung 48 zugeordnet, die gemeinsam über das Druckentlastungsventilsystem 50 allen vorhandenen druckentlastenden Druckentlastungsverbindungen 52 zur Verfügung steht. Alle Elemente der Druckentlastungseinrichtung 70 sind ebenfalls in dem Verbindungsblock 82 untergebracht.

Durch die in Figur 1 und Figur 2 beschriebene Anordnung der Schnellkupplung 100 ist eine schrittweise Druckentlastung der Schnellkupplung 100 im Steckteil 12 und Hülsenteil 14 erreichbar. Es wird im Folgenden davon ausgegangen, dass beide Kupplungsteile 12 und 14 in den Kanälen 66 und 68 im ungekuppelten Zustand druckbehaftet sind.

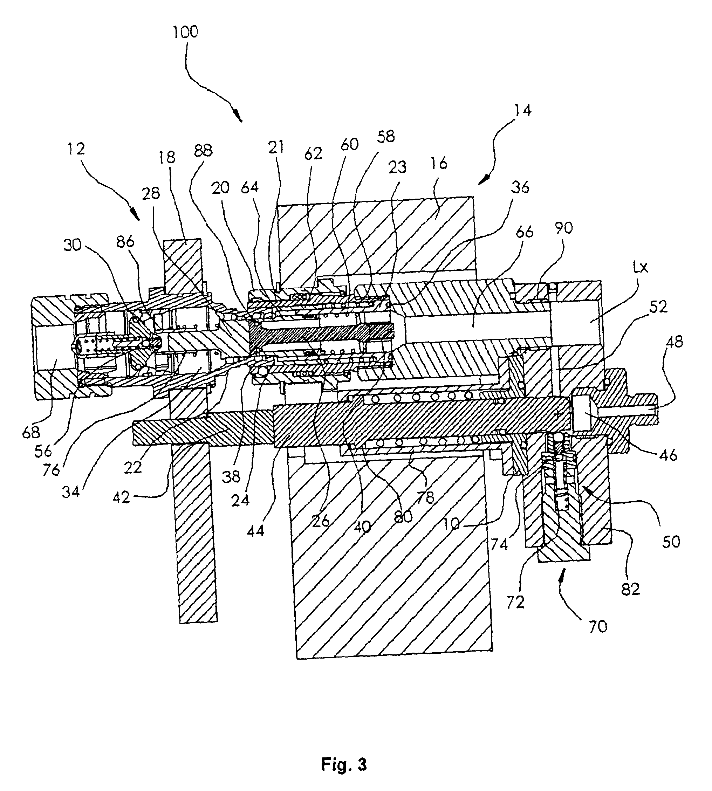

Figur 3 zeigt einen Schnitt durch die Schnellkupplung 100 in einem ersten Kupplungsschritt. In diesem ersten Kupplungsschritt ist das Hülsenteil 14 beim Kupplungsvorgang druckentlastbar. Die Funktion der Druckentlastung wird im Folgenden näher beschrieben. Dabei wird nur auf die Bezugszeichen eingegangen, die zur Erläuterung der Funktion benötigt werden. Die weiteren Bezugszeichen entsprechen den Figuren 1 und 2.

Die Ausgangsposition ist die ungekuppelte Schnellkupplung 100 der Figur 2. Durch axiale Verlagerung des Verbindungsblockes 18 mit integriertem Steckteil 12 und Zapfen 42 in Richtung des Hülsenteiles 14 wird das Gehäuse 22 mit der Gehäusestirnfläche 24 in das Hülsenteil 14 eingeschoben.

Dadurch werden die Gehäuseelemente 62 und 64 gegen die Federelemente 58 und 60 in Richtung des Kanals 66 axial verschoben.

Der Stößel 28 verlagert sich axial gegen die Kraft des Federelementes 76 infolge der Gegenkraft, die von dem feststehenden Schiebeelement 26 ausgeht, in Richtung des Kanals 68.

Durch diese Anordnung wird die Dichteinrichtung 88 des Schiebeelementes 26 am Gehäuseelement 62 freigegeben. Mit Beginn der axialen Verschiebung berührt der Zapfen 42 den Steuerkolben 44.

Der Steuerkolben 44 wird weiter als bei der Ausgangsposition in die Druckentlastungseinrichtung 70 hinein verschoben. Die Nocke 54 läuft auf die Ventilkugel 74 auf. Die Ventilkugel 74 gibt gegen die Wirkung der Ventilfeder 72 eine Öffnung zwischen Druckentlastungsverbindung 52 und Druckentlastungskammer 46 frei. Dadurch, dass die Druckentlastungskammer 46 mit einer nicht druckbehafteten Druckentlastungsleitung 48 verbunden ist, findet nach dem Prinzip der kommunizierenden Gefäße eine Druckentlastung im Hülsenteil 14 und teilweise im Steckteil 12 statt.

Die Druckentlastung wirkt über die Druckentlastungsverbindung 52 über den Kanal 66 bis zur Kammer 34 im Steckteil 12 fort. Der Steuerkolben 44 verlässt durch diese Verlagerung seinen Anschlag 80 in der Lagerhülse 78.

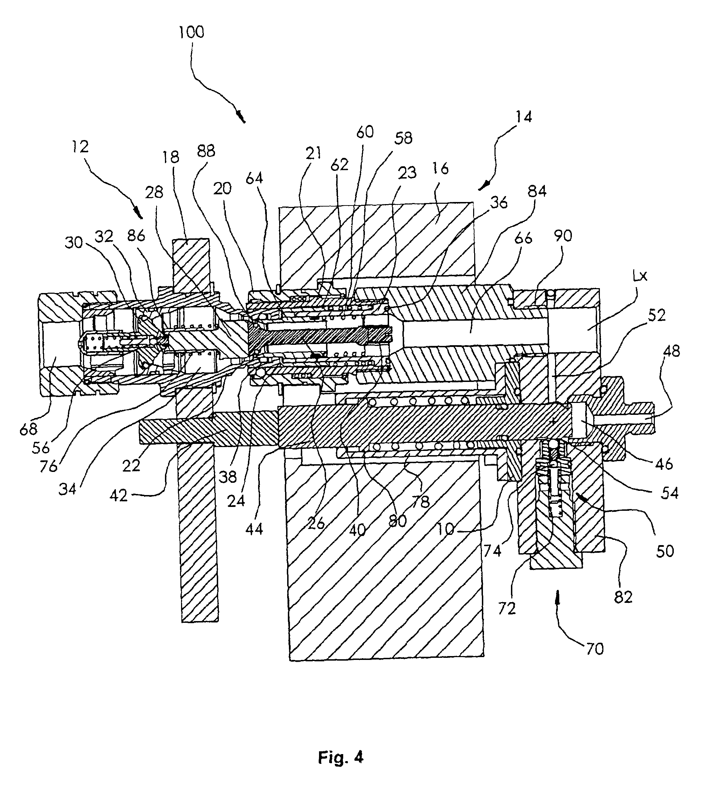

Figur 4 zeigt den Schnitt durch die Schnellkupplung 100 im gekuppelten Zustand nach dem ersten Kupplungsschritt.

Es ist erkennbar, dass die Dichteinrichtung 88 durch axiale Verschiebung der Gehäuseelemente 62 und 64 freigegeben und eine Verbindung zur Kammer 34 vorhanden ist. Das Federelement 76 des Steckteiles 12 befindet sich bereits im teilweise gespannten Zustand. Das Druckentlastungsventilsystem 50 ist geöffnet und ein Druckausgleich über Kanal 66 und die Druckentlastungsverbindung 52 hat stattgefunden.

In Fortführung der zueinander führenden Bewegung der Verbindungsblöcke 16 und 18 dringt der Steuerkolben 44 weiter in das Druckentlastungsventilsystem 50 ein. Figur 4 zeigt, dass die Nocke 54 weiterhin im Bereich der Ventilkugel 74 angeordnet ist.

Eine besondere Ausführungsform, die jedoch nicht wesentlich für die Erfindung ist, ermöglicht durch ein Druckentlastungsventil 56 in einem der beiden Kupplungsteile 12 oder 14 eine erste Druckentlastung. In dieser Ausführungsform befindet sich das Druckentlastungsventil 56 im Steckteil 12.

Der Stößel 28 berührt mit seiner dem Ventil 30 zugewandten Seite einen in das Ventil 30 integrierten Druckstift, der eine Vorsteuerströmung in vorhandenen Spalten in dem Ventil 30 freigibt. Eine solche Einrichtung ist bereits bekannt und dient an dieser Stelle nur der Beschreibung und Vervollständigung der Funktion der Schnellkupplung 100.

Während der erzeugten Vorsteuerströmung, die einen ersten Druckausgleich zwischen der Kammer 34 und dem Kanal 68 bewirkt, liegt das Ventil 30 noch am Dichtsitz 32 an.

Bei dem weiteren Kupplungsvorgang wird das Ventil 30 in Richtung des Kanals 68 durch die Einwirkung des Stößels 28 weiter axial verlagert. Der Dichtsitz 32 wird freigegeben und über die Kammer 34 wird der Kanal 68 durch die Drukkentlastungseinrichtung 70 druckentlastet.

Figur 4 zeigt ferner, dass der Zapfen den Steuerkolben 44 gleichzeitig weiter in die Druckentlastungseinrichtung 70 verlagert. Das Ende der Nocke 54 ist erreicht. Die Nocke beginnt von der Ventilkugel 74 abzulaufen. Mit dem Ablaufen der Nocke 54 von der Ventilkugel 74 schließt sich das Druckentlastungsventilsystem 50 und infolge wird die Druckentlastungskammer 46 verschlossen.

Diese Druckentlastungsfunktion entsprechend den Figuren 3 und 4 ist durch die radiale Anordnung von mehreren Druckentlastungsventilsystemen 50 und zugehörigen radialen Druckentlastungsverbindungen 52 um die Druckentlastungskammer 46 für beliebig viele Kupplungspaare 12 und 14 realisierbar. Andere nicht radiale Anordnungen sind denkbar.

Da die Nocke 54 auf dem Steuerkolben 44 auf dem gesamten Umfang des Steuerkolbens angeordnet ist, wirkt die Steuereinrichtung 10 gleichermaßen über das Druckentlastungsventilsystem 50 und die Druckentlastungsverbindungen auf mehrere Kupplungspaare 12 und 14 druckentlastend.

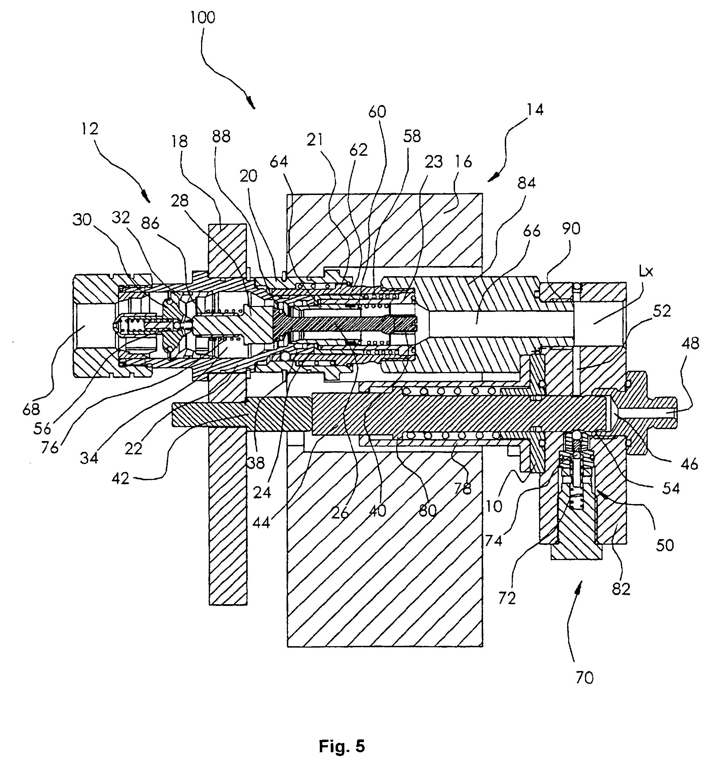

Figur 5 zeigt die Schnellkupplung 100 in vollständig geöffneten gekuppeltem Zustand.

Das Federelement 76 im vollständig gespannten Zustand sichtbar. Der Stößel 28 drückt gegen das Ventil 30 und das Gehäuse 22 des Steckteiles 12 und ist vollständig in Richtung des Hülsenteiles 14 verlagert. Die Gehäusestirnfläche 24 hat das Gehäuseelemente 62 gegen die Federelemente 58 und 60 gedrückt, so dass die Dichteinrichtung 88 des Schiebeelementes 26 die Verbindung zwischen Kammer 34 und Kanal 66 vollständig freigibt.

Der Steuerkolben 44 wird durch den Zapfen 42 weiter in die Druckentlastungseinrichtung 70 hinein geführt, so dass die Nocke 54 die Ventilkugel 74 verlässt und die Wirkung auf den Ventilkörper aufgehoben ist. Die Ventilkugel schließt unter Wirkung der Feder 72. Die Druckentlastungsfunktion der Druckentlastungseinrichtung 70 ist damit unterbrochen. In der Schnellkupplung 100 baut sich der volle Mediumdruck der damit verbundenen geöffneten Kupplungsteile 12 und 14 auf.

In der letzten Phase des Kupplungsvorganges der Verbindungsblöcke 18 und 16 wird das Steckteil 12 gemeinsam mit dem Hülsenteil 14 relativ zu dem äußeren nicht verlagerbaren Gehäuse 20 des Hülsenteiles 14 innerhalb des Verbindungsblockes 16 verschoben. Dabei verlagert sich das gesamte Steckteil 12 und das Hülsenteil 14 geführt vom Gehäuseelement 21 im äußeren Gehäuse 20 gemeinsam mit dem Gehäuseblock 84. Durch die Verbindung des Gehäuseblocks 84 mit der Lagerhülse 78 über das Zwischenlager 90 verlagert sich gleichzeitig der gesamte Verbindungsblock 82 mit der integrierten Druckentlastungseinrichtung 70 um die gleiche Strecke. Die Schnellkupplung 100 hat damit ihre gekuppelte Endstellung erreicht.

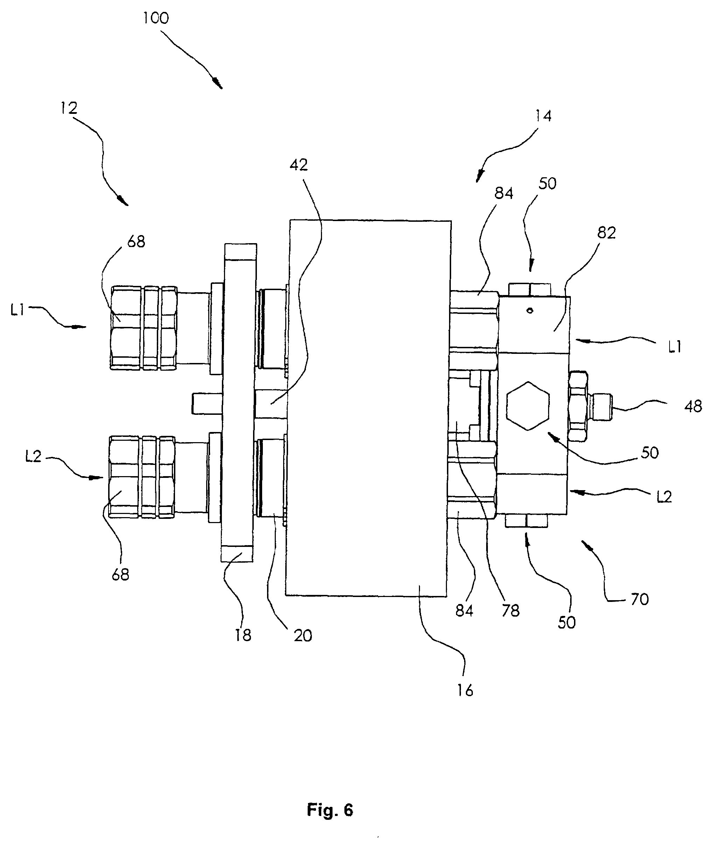

Figur 6 zeigt eine Außenansicht der Schnellkupplung 100 im gekuppelten Zustand. Sichtbar sind die gekuppelten Leitungen L1 und L2 zwischen den Verbindungsblöcken 16 und 18 und der, die Druckentlastungseinrichtung 70 beherbergende, Verbindungsblock 82. Die Leitungen L3 und L4 liegen nicht sichtbar hinter den Leitungen L1 und L2.

Die Druckentlastungseinrichtung 70 wird über die von außen nicht sichtbare Druckentlastungskammer 46 auf die gemeinsame Druckentlastungsleitung 48 geführt. Nur durch ihre Verschlusselemente angedeutet sind die radial zu Steuerkolben 44 angeordneten Druckentlastungsventilsysteme 50, die beim Kupplungsvorgang über den Zapfen 42 und den Steuerkolben 44 geöffnet und geschlossen werden. Ferner ist das äußere Gehäuse 20 des Steckteiles 12 sichtbar. Der Gehäuseblock 84 zwischen den Verbindungsblöcken 16 und 82 vervollständigt die Figur 6.

Die Öffnung der Schnellkupplung 100 erfolgt in umgekehrter Weise.

Entsprechend den Kupplungsschritten in Figur 4 und 3 wird zuerst die Kammer 34 gegenüber dem Kanal 68 mittels des Ventils 30 unter Druckentlastung durch die Druckentlastungseinrichtung 70 geschlossen.

Die Kraft des Federelementes 76 führt zu einer Rückführung des Stößels 28 in den Ausgangszustand. Die Gehäuseelemente 62 und 64 werden ebenfalls unter der Kraft der Federelemente 58 und 60 in ihre Ausgangsposition zurück verlagert, so dass die Dichteinrichtung 88 des Schiebeelementes 26 wieder an dem Gehäuseelement 64 dichtet.

Dadurch wird im Hülsenteil 14 der Kanal 66 gegen die Kammer 34 beziehungsweise den Stößel 28 unter Druckentlastung verschlossen.

Gleichzeitig schließt die Druckentlastungseinrichtung 70, indem die Steuereinrichtung 10 den Bereich der Ventilkugel 74 in der Druckentlastungseinrichtung 70 verlässt, und der Druckausgleich ist unterbrochen. Jedes Kupplungsteil 12 und 14 für sich ist somit nach Trennung der Verbindungsblöcke 16 und 18 sowohl gegenüber der Druckentlastungsverbindung 52 als auch stirnseitig abgedichtet.

### BEZUGSZEICHENLISTE

- 100: Schnellkupplung
- 10: Steuereinrichtung
- 12: Steckteil
- 14: Hülsenteil
- 16: Verbindungsblock
- 18: Verbindungsblock
- 20: äußeres Gehäuse
- 21: Gehäuseelement
- 22: Gehäuse
- 23: Gehäuseelement
- 24: Gehäusestirnfläche
- 26: Schiebeelement
- 28: Stößel
- 30: Ventil
- 32: Dichtsitz
- 34: Kammer
- 36: Dichteinrichtung
- 38: Dichteinrichtung
- 40: Schiebeelementlager
- 42: Betätigungseinrichtung (Zapfen)
- 44: Steuerkolben
- 46: Druckentlastungskammer
- 48: Druckentlastungsleitung
- 50: Druckentlastungsventilsystem
- 52: Druckentlastungsverbindung
- 54: Nocke
- 56: Druckentlastungsventil
- 58: Federelement
- 60: Federelement
- 62: Gehäuseelement
- 64: Gehäuseelement
- 66: Kanal
- 68: Kanal
- 70: Druckentlastungseinrichtung
- 72: Ventilfeder
- 74: Ventilkugel
- 76: Federelement
- 78: Lagerhülse
- 80: Anschlag
- 82: Verbindungsblock
- 84: Gehäuseblock
- 86: Stößellager
- 88: Dichteinrichtung
- 90: Zwischenlager
- 91: Dichteinrichtung
- Lx: Leitungen

## Patentansprüche

1. Kupplung (100) zum Verbinden von wenigstens zwei unter Druck stehenden Leitungen (Lx) mit einem ersten Kupplungsteil, das druckdicht mit einem zweiten Kupplungsteil verbindbar ist und mit einer der Kupplung (100) zugeordneten externen Druckentlastungseinrichtung (70), die über wenigstens eine Druckentlastungsverbindung (52) mit wenigstens einer der unter Druck stehenden Leitungen (Lx) verbindbar ist, **dadurch gekennzeichnet, dass** die Kupplung (100) eine Schnellkupplung ist und dass das erste Kupplungsteil ein Steckteil (12) und gemeinsam mit einer Betätigungseinrichtung (42) für die Druckentlastungseinrichtung (70) in einem Verbindungsblock (18) angeordnet ist.

2. Schnellkupplung nach Anspruch 1, **dadurch gekennzeichnet, dass** das zweite Kupplungsteil ein Hülsenteil (14) ist und gemeinsam mit einer Steuereinrichtung (10) für die Druckentlastungseinrichtung (70) in einem Verbindungsblock (16) angeordnet ist.

3. Schnellkupplung nach Anspruch 2, **dadurch gekennzeichnet, dass** die Steuereinrichtung (10) einen verlagerbaren Steuerkolben (44) mit mindestens einer Nocke (54) umfasst.

4. Schnellkupplung nach einem der vorhergehenden Ansprüche, **dadurch gekennzeichnet, dass** eine Betätigungseinrichtung für die Druckentlastungseinrichtung (70) einen Zapfen (42) umfasst, mit dem der Steuerkolben (44) zusammenwirkt, und insbesondere auf einer Achse mit dem Steuerkolben (44) angeordnet ist.

5. Schnellkupplung nach Anspruch 3, **dadurch gekennzeichnet, dass** die Steuereinrichtung (10) in die Druckentlastungseinrichtung (70) eingreift, die gemeinsam mit einem Teilbereich des Hülsenteiles (14) in einem Verbindungsblock (82) angeordnet ist.

6. Schnellkupplung nach einem der vorhergehenden Ansprüche, **dadurch gekennzeichnet, dass** die Druckentlastungseinrichtung (70) die Steuereinrichtung (10), die Druckentlastungsverbindung (52), mindestens ein Druckentlastungsventilsystem (50), mindestens eine Druckentlastungskammer (46) und mindestens eine Druckentlastungsleitung (48) umfasst.

7. Schnellkupplung nach einem der vorhergehenden Ansprüche, **dadurch gekennzeichnet, dass** das mindestens eine Druckentlastungsventilsystem (50) mindestens eine Ventilfeder (72) und mindestens eine Ventilkugel (74) umfasst.

8. Schnellkupplung nach einem der vorhergehenden Ansprüche, **dadurch gekennzeichnet, dass** jeder Druckentlastungsverbindung (52) mindestens ein Druckentlastungsventilsystem (50) zugeordnet ist.

9. Schnellkupplung nach einem der vorhergehenden Ansprüche, **dadurch gekennzeichnet, dass** mehrere Druckentlastungsventilsysteme (50) der Druckentlastungseinrichtung (70) auf mindestens eine Druckentlastungskammer (46) und mindestens eine Druckentlastungsleitung (48) geführt sind.

10. Schnellkupplung nach einem der vorhergehenden Ansprüche, **dadurch gekennzeichnet, dass** das Druckentlastungsventilsystem (50) radial zum Steuerkolben (44) angeordnet sind.

11. Schnellkupplung nach einem der vorhergehenden Ansprüche, **dadurch gekennzeichnet, dass** die Steuereinrichtung (10) und die Druckentlastungskammer (46) mit ihrer Druckentlastungsleitung (48) auf einer Achse angeordnet sind.

12. Schnellkupplung nach einem der vorhergehenden Ansprüche, **dadurch gekennzeichnet, dass** das Steckteil (12) ein Ventil (30) zwischen einem Kanal (68) und einer Kammer (34) und eine Dichteinrichtung (91) zwischen einem Stößel (28) und einem Gehäuse (22) aufweist.

13. Schnellkupplung nach einem der vorhergehenden Ansprüche, **dadurch gekennzeichnet, dass** das Hülsenteil (14) eine Dichteinrichtung (38) zwischen einem Schiebeelement (26) und einem Gehäuseelement (64) aufweist.

14. Schnellkupplung nach einem der vorhergehenden Ansprüche, **dadurch gekennzeichnet, dass** bei einem Kupplungsvorgang der Kupplungsteile (12) und (14) gleichzeitig die Verbindungsblöcke (16) und (18) gegeneinander verlagerbar sind.

15. Schnellkupplung nach einem der vorhergehenden Ansprüche, **dadurch gekennzeichnet, dass** der Zapfen (42), der den Steuerkolben (44) betätigt, in einem ersten Kupplungsschritt einen Durchgang vom Kanal (66) im Hülsenteil (14) öffnet, wobei über die Nocke (54) des Steuerkolbens (44) das Druckentlastungsventil (56) zur Druckentlastungskammer (46) geöffnet wird.

16. Schnellkupplung nach einem der vorhergehenden Ansprüche, **dadurch gekennzeichnet, dass** das Ventil (30) in einem zweiten Kupplungsschritt eine Verbindung zwischen dem Kanal (68) und der Druckentlastungskammer (46) über das Druckentlastungsventil (56), über die Kammer (34), an der Dichtungseinrichtung (88) vorbei durch den Kanal (66), über die Druckentlastungsverbindung (52) durch das Druckentlastungsventilsystem (50) aufweist, wobei über die Nocke (54) des Steuerkolbens (44) das Druckentlastungsventilsystem (50) zur Druckentlastungskammer (46) und zur anschließenden Druckentlastungsleitung (48) zur Erzeugung eines Druckausgleichs innerhalb der Schnellkupplung (100) geöffnet gehalten wird.

17. Schnellkupplung nach einem der vorhergehenden Ansprüche, **dadurch gekennzeichnet, dass** der Zapfen (42) den Steuerkolben (44) in einem dritten Kupplungsschritt axial verlagert und unter gleichzeitiger Freigabe des Ventils (30) die Kammer (34) und den Kanal (68) miteinander verbindet, wobei die Nocke (54) des Steuerkolbens (44) das Druckentlastungsventilsystem (50) geöffnet hält und die Druckentlastungsverbindung (52) zur Druckentlastungskammer (46) und zur anschließenden Druckentlastungsleitung (48) zur Erzeugung eines Druckausgleichs innerhalb der Schnellkupplung (100) freigibt.

18. Schnellkupplung nach einem der vorhergehenden Ansprüche, **dadurch gekennzeichnet, dass** in einem vierten Kupplungsschritt durch eine weitere axiale Verlagerung des Zapfens (42) der Steuerkolben (44) vollständig in das Druckentlastungsventilsystem (50) eingeführt wird, wobei die Nocke (54) des Steuerkolbens (44) am Druckentlastungsventilsystem (50) vorbeigeführt wird und die Druckentlastungsverbindung (52) zur Druckentlastungskammer (46) und zur anschließenden Druckentlastungsleitung (48) in der Schnellkupplung (100) schließt.

19. Schnellkupplung nach Anspruch 18, **dadurch gekennzeichnet, dass** die Nocke (54) die Ventilkugel (74) freigibt und **dadurch** das Druckentlastungsventilsystem (50) unter Wirkung der Ventilfeder (72) in die Schließstellung führt.

20. Schnellkupplung nach Anspruch 16, **dadurch gekennzeichnet, dass** in dem zweiten Kupplungsschritt das Druckentlastungsventil (56) durch Betätigung eines Druckstiftes mittels des Stößels (28) in das Ventil (30) öffenbar ist.

## Claims

1. Coupling (100) for connecting at least two pressurised lines (Lx) with a first coupling half which can be connected pressure-proof with a second coupling half and with an external pressure relief device (70) associated with coupling (100) which can be connected with at least one of the pressurised lines (Lx) via at least one pressure-relief connection (52) **characterised in that** coupling (100) is a quick coupling and that the first coupling half is a plug-in part (12) being arranged together with an actuator (42) for the pressure-relief device (70) in a connection block (18).

2. Quick coupling according to claim 1 **characterised in that** the second coupling half is a socket part (14) being arranged together with a control unit (10) for the pressure-relief device (70) in a connection block (16).

3. Quick coupling according to claim 2 **characterised in that** control unit (10) comprises a displaceable control piston (44) with at least one cam (54).

4. Quick coupling according to any of the preceding claims **characterised in that** an actuator for pressure-relief device (70) comprises a pivot (42) with which control piston (44) co-operates and is in particular arranged on one axis with control piston (44).

5. Quick coupling according to claim 3 **characterised in that** control unit (10) engages pressure-relief device (70) which is arranged together with part of the socket part (14) in a connection block (82).

6. Quick coupling according to any of the preceding claims **characterised in that** pressure-relief device (70) comprises control unit (10), pressure-relief connection (52), at least one pressure-relief valve system (50), at least one pressure-relief chamber (46) and at least one pressure-relief line (48).

7. Quick coupling according to any of the preceding claims **characterised in that** the at least one pressure-relief valve system (50) comprises at least one valve spring (72) and at least one valve ball (74).

8. Quick coupling according to any of the preceding claims **characterised in that** at least one pressure-relief valve system (50) is associated with each pressure-relief connection (52).

9. Quick coupling according to any of the preceding claims **characterised in that** several pressure-relief valve systems (50) of pressure-relief device (70) are led to at least one pressure-relief chamber (46) and at least one pressure-relief line (48).

10. Quick coupling according to any of the preceding claims **characterised in that** pressure-relief valve system (50) is arranged radially to control piston (44).

11. Quick coupling according to any of the preceding claims **characterised in that** control unit (10) and pressure-relief chamber (46) with its pressure-relief line (48) are arranged on one axis.

12. Quick coupling according to any of the preceding claims **characterised in that** the plug-in part (12) is provided with a valve (30) between a channel (68) and a chamber (34) and a sealing device (91) between a plunger (28) and a housing (22).

13. Quick coupling according to any of the preceding claims **characterised in that** the socket part (14) is provided with a sealing device (38) between a sliding member (26) and a housing member (64).

14. Quick coupling according to any of the preceding claims **characterised in that** during the coupling of coupling halves (12) and (14) the connection blocks (16) and (18) are at the same time displaceable against each other.

15. Quick coupling according to any of the preceding claims **characterised in that** pivot (42) which actuates control piston (44) opens in a first coupling step a passage from channel (66) in socket part (14) thereby opening via cam (54) of control piston (44) the pressure-relief valve (56) to pressure-relief chamber (46).

16. Quick coupling according to any of the preceding claims **characterised in that** valve (30) is provided in a second coupling step with a connection between channel (68) and a pressure-relief chamber (46) via pressure-relief valve (56), via chamber (34) passing sealing (88) through channel (66), via pressure-relief connection (52) through pressure-relief valve system (50), the pressure-relief valve system (50) to pressure-relief chamber (46) and the subsequent pressure-relief line (48) being kept open by means of cam (54) of control piston (44) for creating a pressure compensation within the quick coupling (100).

17. Quick coupling according to any of the preceding claims **characterised in that** pivot (42) axially displaces control piston (44) in a third coupling step and connects chamber (34) and channel (68) with each other, simultaneously releasing valve (30), with cam (54) of control piston (44) keeping open pressure-relief valve system (50) and releasing the pressure-relief connection (52) to pressure-relief chamber (46) and the subsequent pressure-relief line (48) for creating a pressure compensation within quick coupling (100).

18. Quick coupling according to any of the preceding claims **characterised in that** in a fourth coupling step a control piston (44) is fully inserted into pressure-relief valve system (50) by means of a further axial displacement of pivot (42), with cam (54) of control piston (44) being guided past the pressure relief valve system (50), closing the pressure-relief connection (52) to pressure-relief chamber (46) and the subsequent pressure-relief line (48) in quick coupling (100).

19. Quick coupling according to claim 18 **characterised in that** cam (54) releases valve ball (74) thereby moving pressure-relief valve system (50) through the action of valve spring (72) to the off position.

20. Quick coupling according to claim 16 **characterised in that** in the second coupling step the pressure-relief valve (56) can be opened into valve (30) by actuating a pressure pin by means of plunger (28).

## Revendications

1. Raccord (100) pour la connexion d'au moins deux conduites sous pression (Lx) avec un premier élément de raccord qui peut être connecté avec un second élément de raccord de façon étanche à pression et avec une installation de décompression (70) externe attribuée au raccord (100), qui peut être connectée avec au moins une conduite sous pression (Lx) par le biais d'au moins une connexion de décompression (52), **caractérisé en ce que** le raccord (100) est un raccord rapide et **en ce que** le premier élément de raccord est un élément mâle (12) et est positionné dans un bloc de connexion (18) en commun avec un élément d'actionnement (42) pour l'installation de décompression (70).

2. Raccord rapide selon la revendication 1, **caractérisé en ce que** le deuxième élément de raccord est un élément femelle (14) et est positionné dans un bloc de connexion (16) en commun avec une installation de guidage (10) pour l'installation de décompression (70).

3. Raccord rapide selon la revendication 2, **caractérisé en ce que** l'installation de guidage (10) comprend un piston de guidage (44) avec au moins un mamelon (54).

4. Raccord rapide selon l'une des revendications précédentes, **caractérisé en ce qu'**un élément d'actionnement pour l'installation de décompression (70) comprend un tenon (42), avec lequel le piston de guidage (44) exerce un effet, et qui est en particulier positionné sur un axe avec le piston de guidage (44).

5. Raccord rapide selon la revendication 3, **caractérisé en ce que** l'installation de guidage (10) s'encastre dans l'installation de décompression (70), qui est positionnée dans un bloc de connexion (82), en commun avec une partie de l'élément femelle (14).

6. Raccord rapide selon l'une des revendications précédentes, **caractérisé en ce que** l'installation de décompression (70) comprend l'installation de guidage (10), la connexion de décompression (52), au moins un système de soupapes de décompression (50), au moins une chambre de décompression (46) et au moins une conduite de décompression (48).

7. Raccord rapide selon l'une des revendications précédentes, **caractérisé en ce qu'**au moins un système de soupapes de décompression (50) comprend au moins un ressort de soupape (72) et au moins une bille de soupape (74).

8. Raccord rapide selon l'une des revendications précédentes, **caractérisé en ce que** chaque système de soupapes de décompression (50) est attribué à au moins une connexion de décompression (52).

9. Raccord rapide selon l'une des revendications précédentes, **caractérisé en ce que** plusieurs systèmes de soupapes de décompression (50) de l'installation de décompression (70) sont conduits à au moins une chambre de décompression (46) et à au moins un conduite de décompression (48).

10. Raccord rapide selon l'une des revendications précédentes, **caractérisé en ce que** le système de soupapes de décompression (50) est positionné radialement par rapport au piston de guidage (44).

11. Raccord rapide selon l'une des revendications précédentes, **caractérisé en ce que** l'installation de guidage (10) et la chambre de décompression (46) sont positionnées sur un axe avec leur conduite de décompression (48).

12. Raccord rapide selon l'une des revendications précédentes, **caractérisé en ce que** l'élément femelle (14) présente une soupape (30) entre un canal (68) et une chambre (34) et un installation d'étanchéité (91) entre un poussoir (28) et un boîtier (22).

13. Raccord rapide selon l'une des revendications précédentes, **caractérisé en ce que** l'élément femelle (14) présente une installation d'étanchéité (38) entre un élément coulissant (26) et élément de boîtier (64).

14. Raccord rapide selon l'une des revendications précédentes, **caractérisé en ce que** lors du processus de raccord des éléments de raccord (12) et (14), les blocs de connexion (16) et (18) sont déplaçables l'un vers l'autre simultanément.

15. Raccord rapide selon l'une des revendications précédentes, **caractérisé en ce que** le tenon (42) qui actionne le piston de guidage (44) ouvre un passage du canal (66) dans l'élément femelle (14) lors d'une première phase de raccord, où la soupape de décompression (56) est ouverte vers la chambre de décompression (46) par le biais du mamelon (54) du piston de guidage (44).

16. Raccord rapide selon l'une des revendications précédentes, **caractérisé en ce que** la soupape (30) présente, au cours d'une deuxième phase de raccord, une connexion entre le canal (68) et la chambre de décompression (46) par la soupape de décompression (56), par la chambre (34), le long de l'installation d'étanchéité (88) par le canal (66), par la connexion de décompression (52) par le système de soupapes de décompression (50), où le système de soupapes de décompression (50) est maintenu ouvert vers la chambre de décompression (46) et vers la conduite de décompression (48) s'y raccordant pour la production d'un équilibrage de la pression à l'intérieur du raccord rapide (100), par le biais du mamelon (54) du piston de guidage (44).

17. Raccord rapide selon l'une des revendications précédentes, **caractérisé en ce que** le tenon (42), au cours d'une troisième phase de raccord, déplace axialement le piston de guidage (44) et relie, par la libération simultanée de la soupape (30), la chambre (34) avec le canal (68), où le mamelon (54) du piston de guidage (44) maintient ouvert le système de soupapes de décompression (50) et libère la connexion de décompression (52) vers la chambre de décompression (46) et vers la conduite de décompression (48) pour la production d'un équilibrage de la pression à l'intérieur du raccord rapide (100).

18. Raccord rapide selon l'une des revendications précédentes, **caractérisé en ce que** le piston de guidage (44), au cours d'une quatrième phase de raccord, est introduit entièrement dans le système de soupapes de décompression (50) par un autre déplacement axial du tenon (42), où le mamelon (54) du piston de guidage (44) est conduit le long du système de soupapes de décompression (50) et, dans le raccord rapide (100), la connexion de décompression (52) vers la chambre de décompression (46) et vers la conduite de décompression (48) s'y raccordant se ferme.

19. Raccord rapide selon la revendication 18, **caractérisé en ce que** le mamelon (54) libère la bille de soupape (74) et conduit ainsi le système de soupapes de décompression (50) en position de fermeture sous l'effet du ressort de soupape (72).

20. Raccord rapide selon la revendication 16, **caractérisé en ce que** la soupape de décompression (56), lors de la deuxième phase de raccord, peut être ouverte par l'action d'une goupille de pression au moyen du poussoir (28) dans la soupape (30).
